# DEMANDE DE BREVET EUROPEEN

(11) **EP 0 884 223 A1**
(43) Date de publication de la demande: **16.12.1998**
(21) Numéro de dépôt: 98401295.5
(22) Date de dépôt: 29.05.1998
(51) Int. Cl.: B60R 16/02

(54) **Dispositif et procédé de communication pour outil de diagnostic d'un véhicule automobile**

(30) Priorité: 13.06.1997 FR 9707375
(71) Demandeur: RENAULT, 92109 Boulogne-Billancourt (FR)
(72) Inventeur: Brenckle, Thomas, 91220 Bretigny S/Orge (FR); Meunier, Sylvain, 78280 Guyancourt (FR); Cannoni, Jean-Pierre, 92500 Rueil Malmaison (FR)

(57) **Abrégé**

L'invention concerne un dispositif utilisant pour la transmission des messages de diagnostic embarqué OBD, deux bus de communication différents : le bus obligatoire fonctionnant selon le protocole K&L connecté à l'outil de diagnostic et un bus intersystèmes fonctionnant selon le protocole CAN pour relier les calculateurs du véhicule, la passerelle entre ces deux bus étant réalisée par un calculateur électronique du véhicule, qui doit être connecté simultanément sur les deux bus K&L et CAN. Le bus K&L relie l'outil de diagnostic à un seul calculateur passerelle entre les protocoles des deux bus, alors que le bus CAN relie ledit calculateur passerelle aux autres calculateurs du véhicule participant au diagnostic embarqué, ce qui autorise la gestion de la simultanéité de leurs réponses au niveau logiciel.

## Description

L'invention concerne un dispositif de communication entre un système de diagnostic embarqué dans un véhicule avec un moteur à combustion interne, et un outil de diagnostic extérieur au véhicule, ainsi qu'un procédé de communication utilisant ce dispositif.

Elle concerne tout particulièrement un système de diagnostic embarqué de type On Board Diagnostic (O.B.D.), conforme à la norme ISO 14 230-4 qui est une spécification des restrictions du protocole "Keyword Protocol 2000", interrogé par un équipement de test ou un outil de diagnostic, de type "Scan Tool" par exemple, extérieur au véhicule, auquel il est relié par un medium de communication, ou bus, de type K&L dont le fonctionnement est basé sur le protocole KWP 2000.

Un système de diagnostic embarqué est destiné à contrôler les émissions de polluants, en décelant l'origine probable d'un dysfonctionnement, c'est-à-dire d'une défaillance d'un composant ou d'un système relatif aux émissions, qui entraîne le dépassement des limites d'émissions prévues selon des normes internationales. Parmi les dysfonctionnements possibles, on peut citer la réduction de l'efficacité du convertisseur catalytique des gaz d'échappement, l'existence de ratés d'allumage ou bien encore la détérioration de la sonde à oxygène.

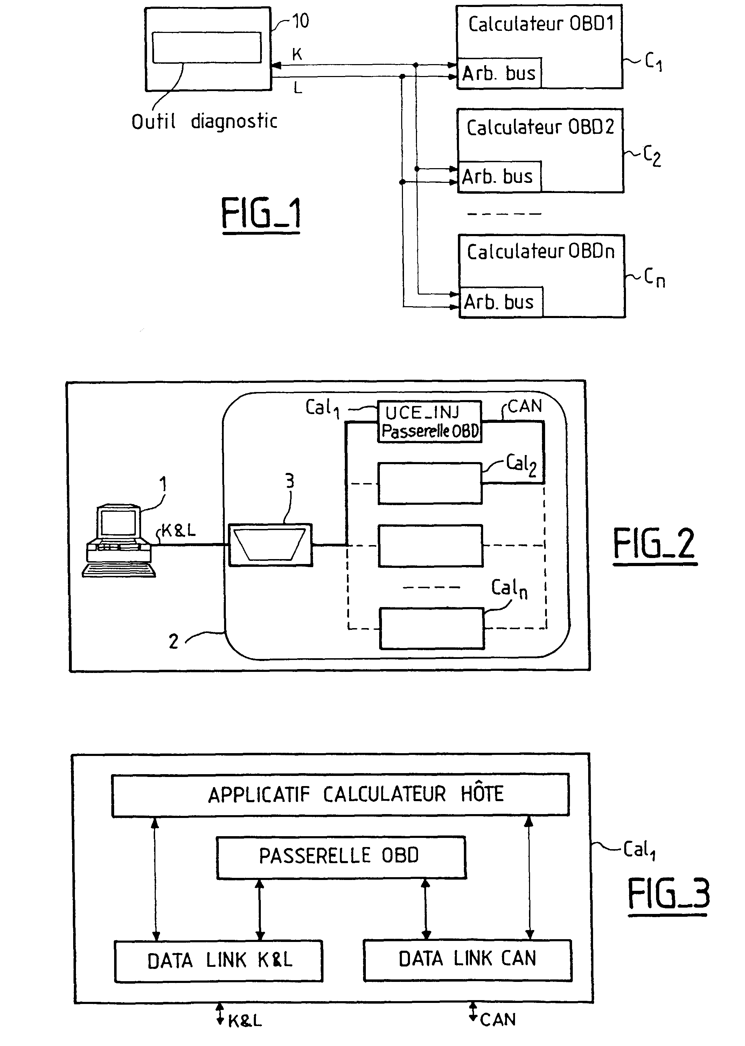

Pour satisfaire aux normes de la réglementation sur le diagnostic embarqué dit OBD, plusieurs unités centrales électroniques, ou calculateurs C₁ à Cₙ, d'un même véhicule automobile pouvant avoir une influence sur les émissions de polluants, tels que le calculateur de contrôle moteur ou celui de la boîte de vitesses automatique, sont susceptibles d'être interrogés par un outil de diagnostic 10, de type OBD, extérieur au véhicule, comme le montre la figure 1, et de répondre à ses requêtes. Cet outil interroge les calculateurs, au nombre de n, dans lesquels sont implantés des services en communication de type OBD, par l'intermédiaire d'un bus bifilaire de type K&L, avec pour particularité spécifique de les interroger simultanément. Le problème posé par cette communication entre l'outil de diagnostic et les unités centrales électroniques du véhicule est la gestion de la simultanéité des réponses de ces unités à une même requête de l'outil.

Actuellement, l'implémentation standard du bus K&L sur les calculateurs ne permet pas l'accès simultané de plusieurs émetteurs sur ce bus.

Une solution peut consister en un arbitrage de bus, Arb.bus sur la figure 1, dans chaque unité centrale électronique, pour l'accès à la ligne K du bus. Cet arbitrage de bus est générateur de surcoût en composants et en logiciel.

La solution que propose l'invention consiste à utiliser, pour la transmission des messages OBD, deux bus de communication différents : le bus obligatoire fonctionnant selon le protocole K&L et un bus intersystèmes fonctionnant selon le protocole CAN pour relier les calculateurs du véhicule, la passerelle entre ces deux bus étant réalisée par un calculateur électronique du véhicule, qui doit être connecté simultanément sur les deux bus, appelés par la suite bus K&L et bus CAN. Le bus K&L relie l'outil de diagnostic à un seul calculateur, qui sert de passerelle entre les protocoles des deux bus, alors que le bus CAN relie ledit calculateur passerelle aux autres calculateurs du véhicule participant au diagnostic embarqué, ce qui autorise la gestion de la simultanéité de leurs réponses au niveau logiciel.

Pour cela, l'objet de l'invention est un dispositif de communication entre un système de diagnostic embarqué dans un véhicule, comprenant plusieurs calculateurs parmi les calculateurs électroniques de contrôle du fonctionnement du véhicule, et un outil de diagnostic extérieur au véhicule et destiné à être connecté audit système de diagnostic embarqué par l'intermédiaire d'un bus de communication bifilaire fonctionnant selon le protocole K&L, caractérisé en ce qu'il est constitué par un calculateur électronique du véhicule qui est connectable à la fois audit bus K&L et à un bus intersystèmes fonctionnant selon le protocole CAN reliant tous les calculateurs électroniques du véhicule, et qui doit remplir une application spécifique de passerelle entre les deux protocoles K&L et CAN exclusivement réservée aux échanges de données entre l'outil de diagnostic et le système fonctionnant en mode diagnostic et remplissant les fonctions suivantes :
- initialisation d'une connexion de diagnostic embarqué;
- transmission vers les calculateurs du système de diagnostic, sur le bus CAN, des requêtes de service émises par l'outil de diagnostic sur le bus K&L ;
- transmission vers l'outil de diagnostic, sur le bus K&L, des réponses émises par lesdits calculateurs électroniques sur le bus CAN ;
- terminaison d'une connexion de diagnostic embarqué.

D'autres caractéristiques et avantages de l'invention apparaîtront à la lecture de la description d'un exemple particulier de réalisation du dispositif de communication, illustrée par les figures qui, outre la figure 1 déjà décrite qui est un exemple de communication entre un véhicule et un outil de diagnostic, sont les suivantes :
- la figure 2 : un schéma de la communication entre un outil de diagnostic et un système de diagnostic embarqué dans un véhicule, selon l'invention ;
- la figure 3 : le schéma fonctionnel simplifié d'un calculateur électronique jouant le rôle de passerelle selon l'invention ;
- la figure 4 : le chronogramme d'un exemple de communication OBD entre deux calculateurs électroniques d'un véhicule et un outil de diagnostic selon l'invention;
- les figures 5 et 6 : le chronogramme des trames circulant sur les bus K&L et CAN, dans deux cas particuliers de dysfonctionnement d'un calculateur OBD.

La figure 2 est le schéma de la communication entre un outil de diagnostic 1 et un système 2 de diagnostic embarqué sur un véhicule par l'intermédiaire d'un connecteur 3 spécifique, qui comprend des calculateurs électroniques Calₙ dont un certain nombre n appartiennent au périmètre OBD, c'est-à-dire dont le fonctionnement influe sur les émissions de polluants et dénommés par la suite calculateurs OBD. Selon l'invention, ces calculateurs électroniques sont connectés entre eux par un bus de type CAN.

Ce nombre entier n est au moins égal à 2, correspondant au contrôle du fonctionnement moteur par la commande de l'allumage et de l'injection notamment, et à celui de la boîte de vitesses automatique, sachant que le nombre de calculateurs dans le véhicule peut s'accroître. Ces calculateurs électroniques sont capables de recevoir et/ou d'émettre des informations multi-directionnelles, codées sous forme binaire de façon séquentielle et circulant sur le bus de communication qui les relie. Ces calculateurs ont des fonctions communes de communication avec le bus multiplexé selon le protocole CAN et des fonctions spécifiques correspondant à une application particulière. Un de ces calculateurs Cal₁, qui est connectable aussi bien au bus K&L qu'au bus CAN, sert de passerelle entre le protocole du bus K&L qui relie l'outil 1 et le système 2 de diagnostic embarqué, et le protocole du bus CAN qui relie les différents calculateurs entre eux. Ce calculateur Cal₁ peut appartenir au périmètre OBD, comme par exemple celui du contrôle moteur ou celui de la boîte de vitesses automatique.

Cette passerelle est complète entre les deux bus, de sorte que, même si les autres calculateurs OBD Cal₂ à Calₙ restent connectés sur le bus K&L, leurs échanges de données concernant le diagnostic embarqué OBD se font exclusivement via le bus CAN.

Pour réduire les problèmes liés aux délais de transmission sur un bus K&L, la passerelle est basée sur le protocole de transmission KWP 2000-4 qui permet la connaissance directe de la longueur du message à transmettre. Ainsi, le calculateur électronique jouant le rôle de passerelle doit évoluer du protocole ISO-9141-2 vers le protocole KWP 2000-4.

Au niveau du bus CAN, le calculateur passerelle doit être compatible avec la messagerie actuelle et les capacités des contrôleurs CAN utilisés, en termes de nombre d'objets et de filtrage.

De plus, le calculateur passerelle doit être indépendant des évolutions du diagnostic embarqué, à condition que celles-ci restent dans le cadre du protocole KWP 2000-4 déjà défini, ces évolutions pouvant concerner la nature ou le nombre des réponses à une requête de l'outil de diagnostic.

Ce calculateur passerelle est utilisé uniquement pour la transmission des échanges de données OBD entre un outil de diagnostic et un véhicule, constitués chacun d'une requête de service émise par l'outil sur la ligne K du bus K&L et qui doit parvenir aux calculateurs pour accéder à ce service, et des réponses émises en retour sur le bus CAN par les calculateurs électroniques OBD interrogés. Ces réponses sont transférées ensuite du bus CAN à la ligne K du bus K&L, ou bien transférées directement sur la ligne K quand elles sont émises par le calculateur passerelle lui-même, dans le cas où ce dernier appartient au système de diagnostic embarqué du véhicule. Pour cette raison, la charge de l'unité centrale programmable ainsi que la taille des mémoires RAM et ROM et des autres ressources du calculateur nécessaires à la fonction de passerelle doivent être réduites au strict minimum indispensable.

Pour définir les fonctions exactes que doit remplir le calculateur passerelle, il est utile de rappeler les éléments des protocoles de transmission de données sur un bus K&L et sur un bus CAN. Tout d'abord, le protocole d'émission de données concernant le diagnostic embarqué OBD suppose un adressage simultané de tous les calculateurs du périmètre OBD, ce qui est parfaitement compatible avec le protocole CAN. De plus, l'identification d'une requête de service en communication de type OBD envoyée par l'outil de diagnostic sera implicitement contenue dans l'identificateur de la trame CAN utilisée pour la transmettre vers les calculateurs OBD.

L'établissement d'une connexion sur un bus K&L utilise la ligne L du bus, et la fin de la connexion se fait soit par l'utilisation d'un mode de test particulier, correspondant au service permettant au calculateur de sortir du mode diagnostic, soit sur échéance d'un délai dit de "time out" d'absence de trames sur la ligne K. Le calculateur passerelle doit régénérer ce protocole de connexion sur le bus CAN qui ne le comporte pas.

La communication de données de diagnostic OBD sur un bus K&L est du type maître/esclave, autrement dit, les calculateurs OBD ne peuvent émettre des données sur la ligne K qu'en réponse à une requête de service émise par l'outil de diagnostic d'une part et dans des délais stricts d'autre part. De plus, l'outil lui-même ne peut émettre une nouvelle requête qu'après réception des réponses de tous les calculateurs à la précédente requête.

Etant donné que le protocole sur un bus K&L ne prévoit aucun acquittement renseignant le calculateur émetteur d'une réponse sur sa bonne réception par l'outil de diagnostic, l'outil devra reposer les requêtes restées sans réponse ou ayant reçu une réponse erronée.

Enfin, le protocole de communication sur un bus K&L impose des délais inter-trames très stricts, notamment celui entre la fin d'une requête et le début d'émission d'une réponse sur la ligne K, ou celui entre deux réponses consécutives, qui sont compris entre 25 et 50 millisecondes. Afin de les respecter, les calculateurs OBD doivent avoir des délais de réaction aux requêtes très courts, inférieurs à 10 millisecondes.

Comme le montre le schéma fonctionnel de la figure 3, le calculateur passerelle Cal₁ doit être connecté aussi bien sur le bus K&L que sur le bus intersystèmes CAN. L'application spécifique de passerelle remplie par le calculateur hôte OBD est indépendante de son applicatif et basée sur les couches logicielles standard d'interface avec les bus K&L et CAN . La passerelle n'a aucune incidence sur la couche Data Link qui relie le calculateur au bus CAN. Par contre, la couche Data Link K&L, servant de liaison entre le calculateur et le bus K&L, doit d'une part délivrer une information sur l'état d'occupation de la ligne K du bus K&L à la couche servant de passerelle, et d'autre part déclarer la rupture d'une communication OBD, à la suite d'une requête d'interruption envoyée par l'outil, uniquement lorsque toutes les réponses issues de tous les calculateurs OBD interrogés ont bien été transmises à l'outil. Cette fin de transmission des réponses peut être détectée par un délai ou "time out" de 60 ms après la dernière réponse transmise.

Le calculateur passerelle étant destiné à autoriser les échanges OBD, il doit assurer les fonctions suivantes entre l'outil de diagnostic et les calculateurs :
- initialisation d'une connexion logique en mode diagnostic, dite connexion OBD ;
- transmission vers les calculateurs du système de diagnostic, sur le bus CAN, des requêtes de service émises par l'outil de diagnostic sur la ligne K du bus K&L ;
- transmission vers l'outil de diagnostic, sur le bus K&L, des réponses émises par lesdits calculateurs électroniques OBD interrogés sur le bus CAN ;
- terminaison d'une connexion de diagnostic embarqué OBD.

Ces fonctions sont assurées par l'intermédiaire du microprocesseur du calculateur, qui traite les informations reçues sur les deux bus.
Le calculateur passerelle doit vérifier la validité d'une requête émise par l'outil sur la ligne K du bus K&L. Une requête est considérée comme invalide si elle est dégradée lors de sa transmission sur la ligne K ou si elle est mal formulée par l'outil. Cette vérification de validité est effectuée par la couche Data Link du calculateur passerelle, qui effectue le filtrage nécessaire immédiatement après chaque émission d'une requête sur la ligne K. Aucun autre contrôle n'est fait par la passerelle car ne lui sont transmises que les requêtes valables.

Concernant l'initialisation d'une connexion OBD, le calculateur passerelle informé de l'ouverture d'une connexion OBD, doit informer alors les calculateurs du périmètre OBD qui doivent passer dans un mode diagnostic particulier. Pour cela, la passerelle émet une trame Tᵢ spécifique selon le protocole CAN, représentée en annexe. Cette trame a un identificateur Id_{OBD} invariable, indépendant du contenu de la requête OBD, mais identifiant bien qu'il s'agit d'une demande de service de type OBD émise par un outil de diagnostic. Elle contient ensuite sa longueur de trame DLC, suivie d'un champ de données ayant deux octets de longueur et dont la valeur est invariablement égale à zéro.

A la réception de chaque trame d'initialisation, le contexte OBD des calculateurs du périmètre OBD est réinitialisé et les calculateurs OBD ne doivent pas transmettre de réponse, car elles ne seraient pas filtrées par la passerelle.

En fin d'initialisation de connexion OBD, le calculateur passerelle dispose de 15 ms pour émettre cette trame d'initialisation qui informe les autres calculateurs OBD du passage en mode diagnostic OBD.

La deuxième fonction que doit assurer la passerelle est la transmission sur le bus CAN des requêtes que l'outil de diagnostic émet sur la ligne K du bus K&L, à condition que ces requêtes soient valides.

Cette transmission d'un bus à l'autre doit être exécutée immédiatement pour chaque nouvelle requête valide émise sur la ligne K du bus K&L.

Une requête de service de type OBD, émise sous forme de trame Req définie selon le protocole KWP 2000.4 et telle que représentée en annexe, contient les champs suivants : sa longueur en en-tête de trame, Long; le code DEST du calculateur OBD à qui elle est destinée; l'adresse EMET de l'outil qui l'envoie; le mode de test correspondant au service faisant l'objet de la requête, auquel sont associés de zéro à six octets de données, et enfin le contrôle de transmission Cks.

Etant données la taille de cette requête et la nature des informations effectivement transmises, son traitement par le calculateur passerelle aboutit à l'émission d'une seule trame T_{req} selon le protocole CAN, qui suffit pour transmettre une requête définie selon le protocole KWP 2000.4.

Cette trame T_{req} selon le protocole CAN doit comporter les champs suivants, comme représentée en annexe : un identificateur invariable Id_{OBD}, indépendant du contenu de la requête et qui est identique à celui de la trame d'initialisation Tᵢ de connexion OBD ; le nombre d'octets de données définissant sa longueur de trame DLC qui s'obtient en incrémentant d'une unité la longueur Long de la trame en mode K&L donnée en en-tête de trame ; puis un champ de données dont le premier octet contient le mode de test de la trame Req et les zéro à six octets suivants contiennent les zéro à six octets de données associées au mode de test ; et dont le dernier octet contient un code CODE généré par la passerelle.

Ce code a pour caractéristique de n'être jamais nul. Il est obtenu par la valeur courante d'un compteur sur 8 bits, qui est initialisé à 1 à chaque début de connexion OBD et qui est incrémenté de 2 avant chaque transmission de trame réalisée par la passerelle sur le bus CAN. Quand le compteur atteint sa valeur maximale égale à 255, une incrémentation supplémentaire de 2 lui redonne sa valeur initiale égale à 1. Sa valeur courante est ainsi toujours différente de zéro.

Le microprocesseur du calculateur passerelle doit donc effectuer les opérations suivantes : un incrément, neuf copies d'octets dans les registres du contrôleur CAN, une addition de 2 à un compteur et les opérations nécessaires à l'émission d'une trame en mode CAN.

Enfin, si une réponse est déjà présente dans le contrôleur CAN au moment de l'envoi d'une requête sur le bus CAN, cette réponse doit être ignorée.

Dès réception d'une requête de service OBD par un calculateur OBD sous forme d'une trame T_{req}, celui-ci prépare et donne l'ordre d'émission de sa réponse sur le bus CAN. Cette réponse se présente sous forme d'une seule trame Tᵣₑₚ selon le protocole CAN, suffisante pour transmettre une réponse OBD complète et qui est représentée en annexe. L'identificateur Id_{CAN} de cette trame est constituée d'un sujet identique pour tous les calculateurs du périmètre OBD, écrit sur les 6 premiers bits, et d'une source dont la valeur identifie le calculateur OBD émetteur de la réponse, écrite sur les 5 derniers bits de cet identificateur.

Dans le cas où un même calculateur OBD doit transmettre plusieurs réponses à une même requête, il doit les transmettre successivement en utilisant le même identificateur de trame.

La trame de réponse Tᵣₑₚ selon le protocole CAN comprend ensuite la longueur DLC, puis un champ de 9 octets de données, dont le premier octet contient l'adresse @UCE du calculateur OBD, le deuxième contient le mode de test de la réponse qui est égal au mode de test de la requête + 40H selon la norme OBD actuelle, et les zéro à six autres octets de données associées à la réponse proprement dite.

Cette trame de réponse émise sur le bus CAN est reçue par le calculateur passerelle, qui doit émettre sur la ligne K du bus K&L la réponse trouvée dans son contrôleur CAN, en la réécrivant sous forme d'une trame Rep selon le protocole K&L. Elle comprend les champs suivants :
- sa longueur Long obtenue en décrémentant la longueur de la trame de réponse Tᵣₑₚ ,
- l'adresse EMET de l'outil de diagnostic destinataire de cette réponse,
- l'adresse @UCE du calculateur OBD émetteur au sens K&L,
- puis les octets du champ de données.

Le premier octet de ce dernier champ contient le mode de test de la réponse, et les autres octets contiennent les zéro à six octets de données associées à la réponse. Cette trame Rep selon le protocole K&L se termine par un champ de contrôle de transmission Cks.

La passerelle doit ensuite confirmer aux calculateurs OBD la transmission de cette réponse sur la ligne K du bus K&L, en émettant sur le bus CAN une trame T_{conf} spécifique de confirmation d'émission, représentée en annexe.

Cette trame de confirmation T_{conf} utilise le même identificateur Id_{OBD} que la trame T_{req} servant à l'émission de la requête OBD, suivi de sa longueur de trame DLC, et d'un champ de données dont le premier octet contient la valeur courante du compteur d'émission de trame, appelée CODE. Le deuxième octet contient l'adresse @UCE du calculateur OBD dont la valeur va être transmise sur la ligne K du bus K&L, et le troisième octet contient une valeur fixe nulle qui permet de différencier ces trames T_{conf} de confirmation d'émission des trames T_{req} d'émission de requêtes dont le dernier octet a une valeur non nulle.

Le code transmis aux différents calculateurs OBD leur permet de diagnostiquer aussi bien une perte éventuelle de requêtes qu'une perte éventuelle de confirmation d'émissions.

Le microprocesseur du calculateur passerelle doit donc effectuer les opérations suivantes : un test pour vérifier que la ligne K du bus K&L est libre, un décrément d'un octet, une addition de 2 à un compteur, une douzaine de copies d'octets et les opérations nécessaires pour émettre d'une part une trame K&L, et d'autre part une trame CAN.

Tous les calculateurs du périmètre OBD répondant simultanément à une requête de l'outil de diagnostic, la simultanéité de leurs réponses est gérée par le bus CAN selon un protocole de gestion particulier, qui est le suivant. Après l'émission d'une requête de service OBD sur le bus CAN sous forme d'une trame T_{req}, tous les calculateurs OBD destinataires de cette requête émettent une réponse dans un délai maximal donné, sous forme d'une trame Tᵣₑₚ selon le protocole CAN, destinée au même contrôleur CAN du calculateur passerelle. Ces différentes réponses ne sont pas mémorisées, de sorte que seule la dernière arrivée dans le contrôleur CAN est prise en compte pour être émise sur le bus K&L vers l'outil de diagnostic.

Lorsque les conditions d'émission sur la ligne K, qui seront décrites ultérieurement, sont remplies et qu'une trame Tᵣₑₚ de réponse OBD a été reçue par la passerelle sur le bus CAN, celle-ci émet sur le bus K&L la réponse réécrite sous forme d'une trame Req selon le protocole K&L et confirme l'émission de cette réponse par l'envoi sur le bus CAN d'une trame de confirmation T_{conf}, qui est traitée par chacun des calculateurs OBD.

A la réception de cette confirmation d'émission, les calculateurs OBD dont les réponses n'ont pas été émises sur la ligne K du bus K&L, donc a fortiori à l'outil de diagnostic, réémettent chacun leur réponse courante sur le bus CAN. Quant au calculateur OBD dont la réponse a été transmise au bus K&L, il en est prévenu par l'adresse @UCE qui est contenue dans la trame de confirmation d'émission. S'il n'a pas d'autre réponse à transmettre, il arrête toute émission OBD jusqu'à une prochaine réception d'une requête OBD, et s'il a d'autres réponses à transmettre en réponse à la même requête, il transmet sa réponse suivante tout de suite après. Le cycle reprend après transmission d'une nouvelle réponse.

Concernant la fin de connexion OBD, elle est gérée en local par chaque calculateur OBD, sans information complémentaire envoyée par la passerelle, car elle est déterminée soit par un mode de test spécifique correspondant au service STOP Communication, envoyé par l'outil de diagnostic et qui permet de sortir du mode diagnostic, soit par un "timeout" de 5 secondes. Cependant, pour le calculateur passerelle, la fin de la connexion OBD est soit déterminée à la fois par la réception d'une requête du service "STOP Communication" sur le bus K&L, et par un "timeout" entre deux trames sur la ligne K supérieur à une durée déterminée, égale par exemple à 60 ms, soit déterminée par un "timeout" de 5 secondes.

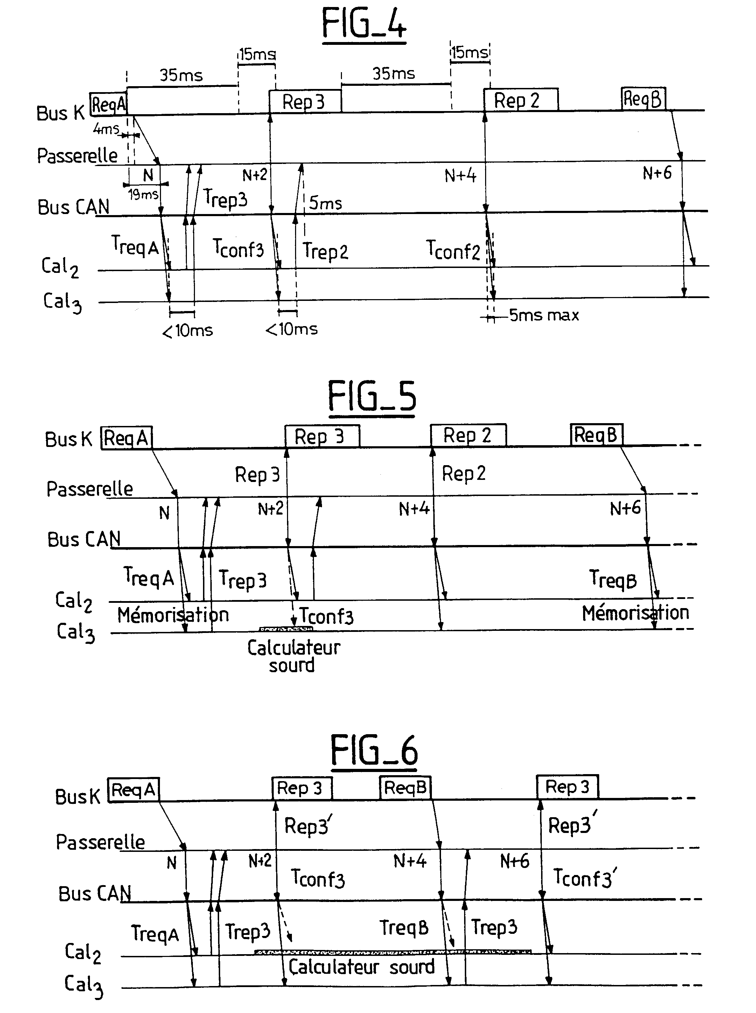

La figure 4 est le chronogramme d'un exemple de communication OBD entre un véhicule comprenant deux calculateurs OBD référencés, Cal₂ et Cal₃, en plus du calculateur Cal₁ servant de passerelle, et un outil de diagnostic. L'échange de données OBD est constitué d'une part par une requête ReqA émise par l'outil sur la ligne K du bus K&L, et d'autre part par des réponses uniques émises par les calculateurs. La réponse unique Tᵣₑₚ₂, respectivement Tᵣₑₚ₃, de chacun des deux calculateurs Cal₂ et Cal₃, est transférée du bus CAN vers le bus K&L par la passerelle, alors que la réponse Rep₁ du calculateur passerelle, s'il appartient au périmètre OBD, est émise directement sur la ligne K.

Lorsque la requête ReqA émise par l'outil de diagnostic est transmise sur le bus K&L, le dernier bit de contrôle Cks étant transmis, la couche Data Link K&L du calculateur passerelle dispose de 19 ms maximum pour valider la requête et, dans le cas où elle est valide, pour prévenir la couche logicielle chargée de la passerelle. Le calculateur passerelle émet alors une trame T_{reqA} selon le protocole CAN et la transmet aux calculateurs OBD, Cal₁ et Cal₂, dans un délai pouvant atteindre 5 ms car cette trame n'est pas prioritaire. A partir de la réception de cette trame T_{reqA}, lesdits calculateurs disposent d'un délai maximal de 10 ms pour préparer et donner l'ordre d'émission de leurs réponses respectives Tᵣₑₚ₂ et Tᵣₑₚ₃ sur le bus CAN. N'étant pas non plus prioritaires, leur délai de transmission peut atteindre 5 ms. Dans le cas particulier choisi, la réponse du calculateur Cal₃ arrive la dernière, après celle du calculateur Cal₂, et est seule prise en compte par la passerelle qui ne mémorise pas les réponses qu'elle reçoit successivement.

Selon le protocole du bus K&L, un délai d'inactivité compris entre 25 et 50 ms est imposé entre la fin d'une requête et le début d'émission d'une réponse sur la ligne K, de même qu'entre deux réponses consécutives. Si le délai d'inactivité est choisi égal à 35 ms, la passerelle doit commencer l'émission d'une réponse dans un délai maximal de 15 ms après ce délai d'inactivité. Si on tient compte du délai de transmission d'une réponse Tᵣₑₚ sur la passerelle, égal à 5 ms, la passerelle dispose alors de 10 ms maximum pour exécuter la fonction de transmission d'une réponse sur la ligne K si elle est libre.

Il peut arriver que la ligne K du bus K&L soit détectée libre au bout du délai d'inactivité de 35 ms, mais ne soit plus libre quelques millisecondes plus tard, notamment si le calculateur passerelle émet lui-même une réponse OBD. Dans ce cas, si une réponse devait être transmise par la passerelle, elle ne sera transmise qu'après libération de la ligne K.

Lorsqu'une réponse, Rep₃, par exemple, a bien été transmise au bus K&L, la passerelle envoie une trame T_{conf} de confirmation d'émission de la réponse, aux deux calculateurs Cal₂ et Cal₃.
Le calculateur Cal₃ détecte que sa réponse a été transmise et considère donc cet échange OBD terminé. Par contre, l'autre calculateur Cal₂ détecte la non transmission de sa réponse et doit donc la réémettre sur le bus CAN dans un délai maximal de 10 ms après réception de la confirmation d'émission. Cette réponse Tᵣₑₚ₂ arrive ensuite dans le contrôleur CAN de la passerelle où elle est mémorisée.

Pour que la passerelle entre les deux protocoles K&L et CAN fonctionne de l'outil de diagnostic vers les calculateurs du périmètre OBD et réciproquement, une couche logicielle supplémentaire ayant en charge la gestion de la communication OBD sur le bus CAN, dénommée couche OBD-CAN, a été définie dans chacun de ces calculateurs, communicant de manière bidirectionnelle avec la couche interaction et l'applicatif entre lesquels elle s'interface. Pour gérer cette communication, elle doit remplir les fonctions suivantes :
- transférer à l'applicatif du calculateur OBD les requêtes valides ;
- émettre, sur le bus CAN, les réponses du calculateur générées par l'applicatif en accord avec le fonctionnement de la passerelle et transférées immédiatement à la couche interaction ;
- informer cet applicatif d'un éventuel changement d'état de la connexion OBD ;
- traitement des confirmations d'émissions envoyées par la passerelle, par un contrôle de l'intégrité de l'échange de données OBD.
Ce contrôle lui permet de gérer certains défauts de fonctionnement du calculateur OBD, détaillés par la suite.

Lorsqu'il n'y a pas de connexion OBD en cours, cette couche OBD-CAN ne transfère aucune requête à l'applicatif et attend une requête spécifique indiquant un établissement de connexion.
Lorsqu'une connexion est établie, les requêtes de service émises par l'outil de diagnostic sont transférées à l'applicatif, sauf celle d'interruption de connexion traitée en local. Les réponses à ces requêtes, émises par l'applicatif sont mémorisées comme réponses courantes et transférées immédiatement à la couche interaction, pour émission sur le bus CAN.

Quant aux confirmations d'émission, un contrôle de l'intégrité de l'échange de données OBD est effectué par chaque calculateur OBD, lui permettant de détecter la perte d'une requête ou d'une confirmation d'émission. Si cette détection est positive, l'échange est considéré comme terminé. Par contre, dans le cas où ledit calculateur OBD considéré reçoit bien une confirmation de l'émission de sa propre réponse, celle-ci est signalée à l'applicatif, sauf s'il s'agit d'une requête d'interruption de la connexion. Dans le cas où ledit calculateur OBD reçoit une confirmation de l'émission d'une réponse envoyée par un autre calculateur du périmètre OBD, et qu'il doit lui-même transmettre une réponse à l'outil de diagnostic, il réémet sa réponse.
Si aucune requête n'est transmise à un calculateur OBD pendant plus de 5 secondes, la connexion OBD est considérée comme interrompue. De même, si une requête d'interruption est émise par l'outil, la couche OBD-CAN de chaque calculateur OBD génère elle-même la réponse sans en informer l'applicatif, et considère la connexion comme interrompue dès la réception de la confirmation d'émission de sa réponse.

Le contrôle d'intégrité d'un échange de données de diagnostic est basé sur l'analyse de la valeur du code transmis dans chaque trame qui est émise, avec l'identificateur Id_{OBD}, par le calculateur passerelle selon le protocole CAN. Cet identificateur correspond aux trames contenant des requêtes et à celles contenant des confirmations d'émission. A chaque transmission d'une nouvelle requête, la valeur du code est mémorisée par l'unité centrale électronique du calculateur OBD, et à chaque confirmation elle est en plus comparée à la valeur attendue au niveau du calculateur, sachant qu'elle est incrémentée de 2 avant chaque émission d'une trame ayant l'identificateur Id_{OBD}.

Sur la figure 4, la valeur initiale du code émis dans la trame T_{req} de la requête ReqA étant égale à N, non nulle et impaire, sa valeur lors de la confirmation T_{conf3} de la réponse du calculateur Cal₃ est égale à N+2, sa valeur lors de la confirmation T_{conf2} de la réponse du calculateur Cal₂ est égale à N+4 et, lors de l'émission d'une autre requête ReqB, elle est égale à N+6.

La figure 5 est le chronogramme des trames circulant sur les bus K&L et CAN, dans le cas particulier d'un dysfonctionnement d'un calculateur OBD qui est sourd lors de l'émission d'une confirmation d'émission de trame. Le calculateur Cal₃ étant sourd au moment de l'envoi d'une trame T_{conf3} qui confirme sa transmission à l'outil, il attend un code égal à N+2 lors de la confirmation T_{conf2} suivante mais il reçoit un code égal à N+4, de sorte qu'il considère l'échange comme terminé. Si ce contrôle du code n'existait pas, le calculateur Cal₃ réémettrait sa réponse puisqu'il reçoit la confirmation d'émission de la réponse du calculateur Cal₂, ce qui aboutirait à une double émission de sa même réponse sur la ligne K du bus K&L.

La figure 6 est le chronogramme des trames dans le cas particulier d'un dysfonctionnement d'un calculateur OBD Cal₂ qui est sourd lors de l'émission d'une nouvelle requête alors que l'échange de données précédent n'est pas terminé pour ledit calculateur. Le calculateur Cal₂ étant sourd d'une part lors de l'émission de la trame T_{conf3} de confirmation de la réponse Rep₃ envoyée par le calculateur Cal₃ à la requête ReqA et d'autre part lors de l'émission d'une nouvelle requête ReqB, il reçoit ensuite une trame T'_{conf3} de confirmation d'émission de la nouvelle réponse Rep'₃ envoyée par le calculateur Cal₃ à cette requête ReqB dont le code est égal à N+6 alors qu'il attendait N+2. Ainsi, il considère l'échange comme terminé et ne réémet pas sa réponse à la première requête.
Pour ce même cas de dysfonctionnement, si l'échange précédent était terminé pour le calculateur Cal₂, il attendrait une nouvelle requête, en ignorant toutes les confirmations d'émission des réponses des autres calculateurs OBD aux requêtes transmises pendant son dysfonctionnement.

La fonction de passerelle OBD est particulièrement bien assurée par un calculateur électronique de contrôle du moteur, pilotant l'allumage et l'injection, en raison du fait qu'il doit transmettre une trame selon le protocole CAN toutes les 10 ms. Pour ce type de calculateur, aucune gestion particulière du temps réel n'est donc requise. Sur la figure 4 déjà décrite, les 19 ms initialement prévues pour les fonctions de validation d'une requête et de transfert de cette requête sur le bus CAN se décomposent en 4 ms, dont dispose la couche Data Link du calculateur passerelle pour valider la requête, suivies de 15 ms dont dispose la passerelle pour transférer la requête sur le bus CAN. Ainsi, le calculateur de contrôle moteur doit simplement exécuter les fonctions définies pour la passerelle à chaque fois que l'ordre de transmission de la trame de période 10 ms est donné.

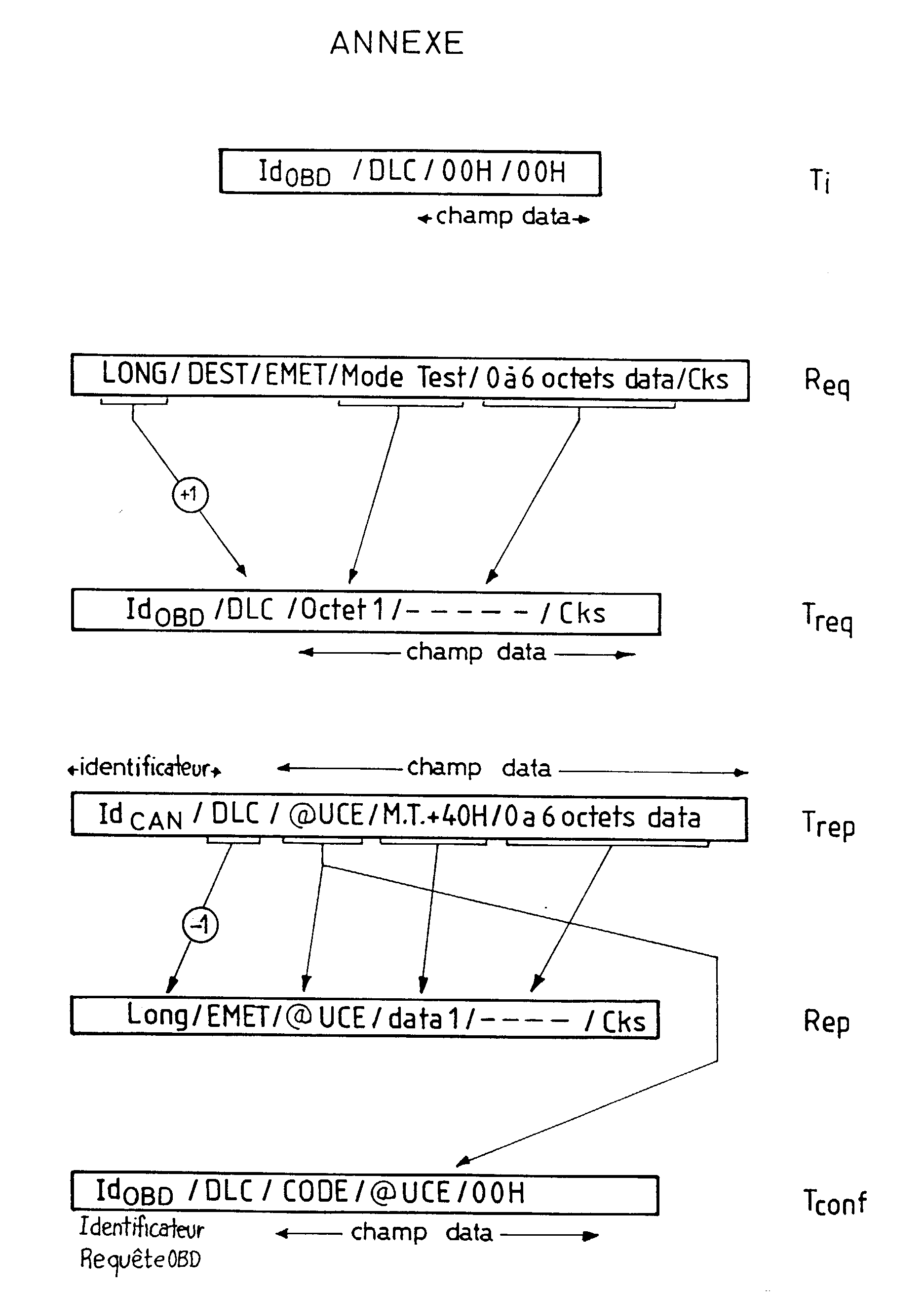

## Revendications

1. Dispositif de communication entre un système de diagnostic embarqué dans un véhicule, comprenant plusieurs calculateurs parmi les calculateurs électroniques de contrôle du fonctionnement du véhicule, et un outil de diagnostic extérieur au véhicule et destiné à être connecté audit système de diagnostic embarqué par l'intermédiaire d'un bus de communication bifilaire de type K&L, caractérisé en ce qu'il est constitué par un calculateur électronique du véhicule qui est connectable à la fois audit bus K&L et à un bus intersystèmes de type CAN reliant tous les calculateurs électroniques du véhicule, et qui doit remplir une application spécifique de passerelle entre les deux bus K&L et CAN exclusivement réservée aux échanges de données de la procédure de diagnostic et remplissant les fonctions suivantes :
- initialisation d'une connexion logique de diagnostic embarqué dite connexion OBD ;
- transmission vers les calculateurs du système de diagnostic, sur le bus CAN, des requêtes de service émises par l'outil de diagnostic sur la ligne K du bus K&L, des réponses ;
- transmission vers l'outil de diagnostic, sur le bus K&L des réponses émises par les calculateurs électroniques OBD interrogés sur le bus CAN ;
- terminaison d'une connexion de diagnostic embarqué.

2. Dispositif de communication selon la revendication 1, caractérisé en ce que l'application spécifique OBD de passerelle que remplit le calculateur électronique connectable au bus K&L et au bus CAN est basée sur les couches logicielles d'interface avec ces deux bus, et est indépendante de l'applicatif dudit calculateur, et en ce que la couche Data Link K&L dudit calculateur délivre une information sur l'état d'occupation de la ligne K du bus K&L à la couche servant de passerelle et déclare la rupture d'une connexion de diagnostic embarqué, à la suite d'une requête spécifique de l'outil de diagnostic, lorsque toutes les réponses de tous les calculateurs électroniques du système de diagnostic embarqué ont été transmises à l'outil de diagnostic.

3. Dispositif de communication selon la revendication 2, caractérisé en ce que chaque calculateur électronique appartenant au système de diagnostic embarqué du véhicule, destiné à être en communication avec un outil de diagnostic, comprend une couche logicielle spécifique supplémentaire (OBD-CAN), communicant avec sa couche intéraction et son applicatif entre lesquelles elle s'interface pour gérer les connexions OBD.

4. Dispositif de communication selon la revendication 2, caractérisé en ce que le calculateur remplissant l'application spécifique de passerelle appartient au système de diagnostic embarqué du véhicule, et peut être destiné au contrôle moteur ou à la boîte de vitesse automatique.

5. Procédé de communication entre un système de diagnostic embarqué dans un véhicule et un outil de diagnostic extérieur au véhicule, utilisant le dispositif selon les revendications 1 à 4, caractérisé en ce que le calculateur électronique remplissant l'application de passerelle entre le bus de type K&L et un bus de type CAN reliant tous les calculateurs électroniques du système de diagnostic embarqué, remplit les fonctions suivantes :
- filtrage des requêtes valides par la couche Data Link K&L du calculateur passerelle ;
- initialisation d'une connexion de diagnostic OBD ;
- transmission, vers le bus de type CAN, de chaque requête valide émise par l'outil de diagnostic, immédiatement après son émission sur la ligne K du bus K&L ;
- transmission, vers le bus de type K&L, de chaque réponse émise sur le bus CAN par les calculateurs électroniques du système de diagnostic embarqué ;
- émission, sur le bus de type CAN, d'une confirmation de la transmission vers le bus de type K&L de chaque réponse.

6. Procédé de communication selon la revendication 5, caractérisé en ce que le calculateur passerelle, qui a reçu une demande de connexion émise par l'outil de diagnostic sur le bus de type K&L, remplit une fonction d'initialisation d'une connexion de diagnostic embarqué, destinée à informer les calculateurs électroniques du système de diagnostic embarqué du véhicule, en émettant sur le bus de type CAN une trame (Tᵢ) spécifique selon le protocole CAN qui comprend les champs suivants :
- un identificateur (Id_{OBD}) invariable, indépendant du contenu de la requête émise par l'outil de diagnostic ;
- la longueur (DLC) de la trame ;
- deux octets de données, de valeur déterminée égale à zéro.

7. Procédé de communication selon la revendication 5, caractérisé en ce que le calculateur passerelle assure la transmission de chaque requête (Req), émise sur le bus de type K&L par l'outil de diagnostic, vers les calculateurs électroniques du système de diagnostic embarqué, en émettant sur le bus de type CAN une trame (T_{req}) qui comprend les champs suivants :
- un identificateur (Id_{OBD}) invariable, identique à celui de la trame (Tᵢ) d'initialisation ;
- la longueur (DLC) de la trame, obtenue en incrémentant la longueur (Long) de la trame (Req) de la requête selon le protocole K&L ;
- un champ de données dont le premier octet contient le mode de test de la trame (Req) de la requête, dont les zéro à six octets suivants contiennent les données associées au mode de test et dont le dernier octet contient un code (CODE) généré par la passerelle, dont la valeur n'est jamais nulle.

8. Procédé de communication selon la revendication 7, caractérisé en ce que ce code est égal à la valeur courante d'un compteur sur 8 bits, qui est initialisé à la valeur 1 à chaque début de connexion de diagnostic et qui est incrémenté de 2 avant chaque transmission de trame réalisée par le calculateur passerelle sur le bus de type CAN, de sorte que sa valeur courante est toujours différente de zéro.

9. Procédé de communication selon la revendication 8, caractérisé en ce que, dès réception d'une trame (T_{req}) de requête de diagnostic envoyée sur le bus de type CAN par le calculateur passerelle, chaque calculateur électronique du système de diagnostic embarqué du véhicule émet sur le bus de type CAN une réponse sous forme d'une trame (Tᵣₑₚ) comprenant les champs suivants :
- un identificateur (Id_{CAN}) , constitué d'un sujet identique pour tous les calculateurs du système de diagnostic, et d'une source identifiant ledit calculateur émetteur de la trame (Tᵣₑₚ) ;
- la longueur (DLC) de la trame ;
- un champ de données dont le premier octet contient l'adresse (@UCE) du calculateur émetteur, le deuxième octet contient le mode de test de la réponse égal au mode de test de la requête + 40H selon la norme OBD actuelle, et les zéro à six autres octets contiennent les données associées.

10. Procédé de communication selon les revendications 5 et 9, caractérisé en ce que le calculateur passerelle effectue la transmission de chaque réponse (Tᵣₑₚ) , émise par les calculateurs du système de diagnostic embarqué, vers l'outil de diagnostic, en émettant une trame (Rep) sur le bus de type K&L comprenant les champs suivants :
- la longueur (Long) de trame obtenue en décrémentant la longueur (DLC) de la trame de réponse (Tᵣₑₚ) ;
- l'adresse (EMET) de l'outil de diagnostic ;
- l'adresse du calculateur émetteur ;
- les données, dont le premier octet contient le mode test de la réponse et dont les zéro à six octets suivants contiennent les données de la réponse ;
- un contrôle de transmission (Cks).

11. Procédé de communication selon les revendications 5 et 10, caractérisé en ce que le calculateur passerelle confirme la transmission des réponses (Rep) en émettant vers les calculateurs du système de diagnostic embarqué, sur le bus de type CAN, une trame (T_{conf}) qui contient les champs suivants :
- un identificateur (Id_{OBD}) identique à celui de la trame (T_{req}) de la requête ;
- la longueur (DLC) de la trame ;
- les données dont le premier octet contient le code (CODE), le deuxième octet contient l'adresse (@ UCE) du calculateur émetteur de la réponse, et le troisième octet contient une valeur fixe nulle.

12. Dispositif de communication selon les revendications 5 et 11, caractérisé en ce qu'à la réception d'une trame (T_{conf}) de confirmation de la transmission d'une réponse envoyée à l'outil de diagnostic par un calculateur électronique du système de diagnostic embarqué, à la suite d'une requête déterminée dudit outil de diagnostic, ledit calculateur émetteur de cette réponse transmet immédiatement une éventuelle autre réponse à la même requête, puis lorsqu'il n'a plus d'autre réponse à émettre, considère cet échange OBD comme terminé.

13. Dispositif de communication selon la revendication 5, caractérisé en ce que la fin d'une connexion de diagnostic embarqué est déterminée par une requête de l'outil de diagnostic possédant un mode test spécifique (STOP Communication) ou par une absence de signal pendant une durée déterminée, et est gérée par chaque calculateur électronique du système de diagnostic embarqué.

14. Dispositif de communication selon les revendications 4 et 5, caractérisé en ce que le calculateur passerelle gère la fin d'une connexion de diagnostic embarqué, pour son propre fonctionnement, lorsqu'elle est déterminée à la fois par la réception d'une requête spécifique de l'outil de diagnostic et par un délai entre deux trames sur la ligne K du bus de type K&L supérieur à une durée déterminée.

15. Procédé de communication selon la revendication 3, caractérisé en ce que la gestion des échanges par la couche supplémentaire (OBD-CAN) de chaque calculateur du système de diagnostic embarqué, comprend les étapes suivantes :
- transfert des requêtes valides émises à l'applicatif du calculateur OBD ;
- émission, sur le bus CAN, des réponses du calculateur générées par l'applicatif en accord avec le fonctionnement de la passerelle et transférées immédiatement à la couche intéraction ;
- information de cet applicatif d'un éventuel changement d'état de la connexion OBD ;
- traitement des confirmations d'émissions envoyées par la passerelle, par un contrôle de l'intégrité de l'échange de données OBD.

16. Procédé de communication selon la revendication 15, caractérisé en ce que ledit contrôle d'intégrité d'un échange de données de diagnostic, effectué par un calculateur du système de diagnostic embarqué, est basé sur l'analyse de la valeur du code transmis dans chaque trame qui est émise par le calculateur passerelle, selon le protocole CAN, avec l'identificateur (Id_{OBD}) spécifique correspondant aux trames contenant des requêtes et à celles contenant des confirmations d'émission, et en ce qu'à chaque transmission d'une nouvelle requête, la valeur du code de la trame est mémorisée par l'unité centrale électronique du calculateur OBD, et à chaque confirmation elle est en plus comparée à la valeur attendue au niveau du calculateur sachant qu'elle est incrémentée de 2 avant chaque émission d'une trame ayant l'identificateur (Id_{OBD}), et en ce que l'échange est considéré comme terminé par ledit calculateur OBD si le code n'a pas la valeur attendue.
